# EUROPÄISCHE PATENTSCHRIFT

(11) **EP 0 817 596 B1**
(45) Veröffentlichungstag und Bekanntmachung des Hinweises auf die Patenterteilung: **02.09.1998**
(21) Anmeldenummer: 96907462.4
(22) Anmeldetag: 14.03.1996
(51) Int. Cl.: A61C 7/00

(54) **DEHNSCHRAUBE ZUM KORRIGIEREN VON FEHLSTELLUNGEN VON ZÄHNEN**
JACKSCREW FOR USE IN CORRECTING MISALIGNMENTS OF TEETH
PLAQUE A VERIN POUR CORRIGER LE MAUVAIS ALIGNEMENT DE LA DENTITION

(30) Priorität: 15.03.1995 DE 29504198 U; 23.05.1995 DE 19518846
(43) Veröffentlichungstag der Anmeldung: 14.01.1998
(73) Patentinhaber: Bernhard Förster GmbH, 75172 Pforzheim (DE)
(72) Erfinder: FÖRSTER, Rolf, D-75173 Pforzheim (DE)
(74) Vertreter: Twelmeier, Ulrich, Dipl.Phys.
(86) Internationale Anmeldenummer: EP9601083
(87) Internationale Veröffentlichungsnummer: WO9628110

(56) Entgegenhaltungen:
- DE-C- 824 832
- US-A- 5 167 500
- US-A- 5 312 247

## Beschreibung

Die Erfindung geht aus von einer Dehnschraube mit den im Oberbegriff des Anspruchs 1 angegebenen Merkmalen. Eine solche Dehnschraube ist bekannt aus der DE-PS 824 832. Die bekannte Dehnschraube dient in Verbindung mit einer geteilten Gaumenplatte dazu, bei falscher Zahnstellung, z.B. bei in die Mundhöhle vorstehenden oder seitlich nach innen verschobenen Zähnen im Oberkiefer oder Unterkiefer die Korrektur in die richtige Zahnstellung vorzunehmen. Die beiden Teile der Gaumenplatte werden durch die Dehnschraube überbrückt und durch Verstellen der Dehnschraube auseinandergetrieben. Zu diesem Zweck hat die bekannte Dehnschraube zwei Körper, die durch eine Doppelspindel in ihrem gegenseitigen Abstand veränderbar sind. Jeder dieser Körper wird üblicherweise in eine der Gaumenplatten eingebettet. Der Druck, der durch das Betätigen der Spindel aufgebaut wird, wird dabei durch Druckfedern, die zwischen der Spindel und den beiden auseinander zu treibenden Körpern wirksam sind, abgefedert. Die Federn sind bei der bekannten Dehnschraube Schraubenfedern, welche die beiden Gewindeabschnitte der Spindel umgeben und sich mit ihrem einen Ende an einem Deckel abstützen, welcher eine Ausnehmung des jeweiligen Körpers verschließt, um sich mit ihrem anderen Ende an einem Widerlager in Gestalt einer Gewindehülse abzustützen, welche auf den betreffenden Gewindeabschnitt der Spindel aufgedreht ist und - gegen Drehungen gesichert - bei Betätigung der Spindel in der betreffenden Ausnehmung des Körpers verschoben wird. Nachteilig dabei ist, daß aufgrund des Hooke'- schen Gesetzes die Federkraft mit zunehmendem Behandlungsfortschritt nachläßt. Damit läßt auch die Wirksamkeit der Dehnschraube während der Behandlungsdauer nach, die Korrektur der Zahnstellung verlangsamt sich und kommt irgendwann ganz zum Stillstand, wenn die Dehnschraube nicht nachgestellt wird. Um die Dehnschraube nicht zu häufig nachstellen zu müssen, unterliegt man leicht der Versuchung, die Federn in der Dehnschraube stärker zu spannen, als für die Zähne und die Zahnstellung gut ist.
Ferner konnten bei der bekannten Dehnschraube Ablagerungen von Speiseresten und Zahnstein in die Dehnschraube eindringen und zu einem Verklemmen und Blockieren der Schraube führen.

Der vorliegenden Erfindung liegt die Aufgabe zugrunde, einen Weg aufzuzeigen, wie das Arbeiten mit solchen Dehnschrauben erleichtert werden kann, wobei die Wunschvorstellung besteht, die Dehnschraube einerseits nicht so häufig nachstellen zu müssen, andererseits aber auch keine Schubspannungsspitzen an den Zähnen zu riskieren.

Diese Aufgabe wird gelöst durch eine Dehnschraube mit den im Anspruch 1 angegebenen Merkmalen . Vorteilhafte Weiterbildungen der Erfindung sind Gegenstand der abhängigen Ansprüche. Die neue Dehnschraube verwendet als Feder nicht eine herkömmliche Stahlfeder, sondern eine Feder aus einer Formgedächtnislegietung, die unter den im Mund vorherrschenden Temperaturen pseudoelastisch ist. Bevorzugte Formgedächtnislegierungen sind Legierungen auf der Basis von Nickel und Titan, in welchen Nickel und Titan in , ungefähr gleichen Atomprozenten enthalten sind. Solche Legierungen können - abhängig von der gewählten Temperatur - entweder in austenitischem oder in martensitischem Zustand vorliegen. Martensit liegt bei niedrigerer Temperatur, Austenit bei höherer Temperatur vor. Die Temperatur, bei welcher sich die Legierung beim Abkühlen von Austenit in Martensit umzuwandeln beginnt, bezeichnet man auch als den Ms-Punkt. Im martensitischen Zustand unterhalb des Ms-Punktes können solche Legierungen Formgedächtnis zeigen: Eine im martensitischen Zustand erfolgte plastische Verformung kann durch Erwärmen auf Temperaturen oberhalb des Ms-Punktes wieder rückgängig gemacht werden. In einem an den Ms-Punkt nach oben anschliessenden Temperaturbereich kann eine solche Formgedächtnislegierung pseudoelastisches Verhalten zeigen. Das peusoelastische Verhalten ist dadurch gekennzeichnet, daß der Kraftbedarf für eine zunehmende Dehnung zwar zunächst wie bei einem Austenit erwartet deutlich ansteigt, dann jedoch nach Erreichen von ungefähr 1 bis 2% Dehnung mit weiter fortschreitender Dehnung nur noch geringfügig zunimmt und erst nach Erreichen größerer Dehnungen von 6 bis 8% wieder steil ansteigt. Der mittlere Dehnungsbereich wird als das "Martensit-Plateau" bezeichnet. Der Name stammt daher, daß sich in der Legierung unter der Einwirkung der Zugspannung Martensit bildet. Wird das Material vom Zug entlastet, kehrt es in den austenitischen Zustand zurück. Diese pseudoelastischen Dehnungen sind in hohem Ausmaß, bis zu Dehnungen über 6 bis 8 %, reversibel. Die Pseudoelastizität gehorcht wegen des ausgeprägten Martensit-Plateaus dem Hooke' schen Gesetz nicht. Das macht Federn, die sich auf diese Weise pseudoelastisch verhalten, für Zwecke der vorliegenden Erfin) dung besonders geeignet, denn bei Federwegen im Bereich des Martensit-Plateaus ist die Rückstellkraft der Feder nahezu unabhängig vom Federweg. Eine Dehnschraube gemäß der Erfindung hat deshalb den großen Vorteil, daß die Zugspannung während der Dauer der Behandlung nahezu unverändert ist. Wegen der gleichbleibenden Federspannung werden die Zähne schneller gerichtet als bisher, wobei ein Nachstellen der Dehnschraube nicht so häufig wie beim Stand der Technik nötig ist. Da sich die Federkraft, solange man sich auf dem Martensit-Plateau bewegt, kaum ändert, kann unter Anwendung der Erfindung obendrein zuverlässig verhindert werden, daß ein behandelnder Kieferorthopäde versehentlich zu starke Spannkräfte einstellt, denn durch einfaches Abstimmen des Federweges auf die Dehnspannen der Dehnschraube kann verhindert werden, daß eine über das Martensit-Plateau hinausgehende Verstellung stattfindet, und deshalb ist bei der erfindungsgemäßen Dehnschraube die Spannkraft annähernd nur durch die Wahl der pseudoelastischen Feder bestimmt, aber nicht durch den Verstellweg der Spindel. Der Verstellweg der Spindel bestimmt lediglich noch das Ende der Zahnkorrektur, aber nicht die dafür aufgewendete Kraft.

Komfort und Sicherheit der Anwendung der Dehnschraube werden durch die Erfindung wesentlich erhöht.

Pseudoelastische Federn sind zwar an sich bereits bekannt, wurden aber in Dehnschrauben für orthodontische Zwecke bislang nicht benutzt, denen sie erfindungsgemäß ein wesentlich verbreitertes Anwendungsfeld eröffnen, indem sie mit den Gefahren (schädliche Spannungsspitzen!), die beim Stand der Technik mit dem erforderlichen häufigen Nachstellen der Dehnschraube einhergehen, ein für alle Mal Schluß machen.

Je nach Wahl der Anordnung der Feder in den Körpern der Dehnschraube kann die Feder als Zugfeder oder als Druckfeder zum Einsatz kommen. Hinsichtlich des Aufbaus der Dehnschraube ist ein Einsatz als Druckfeder günstiger und deshalb bevorzugt.

Die Dehnschraube könnte eine Spindel mit einem Kopf und einem Gewindeteil haben, wobei der Kopf im einen Körper gelagert ist und das Gewindeteil sich in den anderen Körper erstreckt. Vorzugsweise hat die Spindel jedoch zwei Gewindeteile, die sich von einem in der Mitte angeordneten Betätigungsteil der Spindel in entgegengesetzte Richtungen erstrecken und gegenläufiges Gewinde haben. Ein solcher Aufbau ermöglicht größere Verstellwege.

Die Feder muß, um wirksam zu sein, einerseits am Körper angreifen und andererseits an der auf der Spindel befindlichen Gewindehülse. Zu diesem Zweck ist die Ausnehmung im Körper, in welchem sich das Gewindeteil der Spindel, die Gewindehülse und die Feder befinden, durch einen Deckel abgeschlossen, mit dessen Montage der Zusammenbau der Dehnschraube beendet wird. Dieser Deckel kann mit dem jeweiligen Körper verschweißt oder verlötet werden, er kann aber auch eingepreßt oder eingesetzt und durch Umbördeln eines am Körper vorgesehenen Randes festgelegt werden. Dieser Deckel dient dann nicht nur als Widerlager für die Feder, sondern schließt die im Körper vorgesehene Ausnehmung am einen Ende ab, so daß von dort keine Speisereste eindringen, verhärten und dadurch die Funktion der Dehnschraube beeinträchtigen können. Um auch von der anderen Seite her ein Eindringen von Speiseresten zu unterbinden, ist dort vorzugsweise eine Dichtung vorgesehen, insbesondere ein O-Ring, welche in der Nachbarschaft des Betätigungsteils der Spindel auf dieser angeordnet ist und von diesem Ende her den in die jeweilige Ausnehmung des Körpers führenden Zugang abdichtet. Wenn auf diese Weise von Speiseresten, Zahnstein und Plaque-Akkumulation herrührende Ablagerungen in der Ausnehmung, in welcher sich die Gewindehülse und die pseudoelastische Feder befinden, verhindert werden, dann ist eine einwandfreie Funktion der Dehnschraube während der gesamten Behandlungsdauer sichergestellt, ohne daß zwischendurch Reinigungsvorgänge erfolgen müssen.

Die Geradführungsmittel sind zweckmäßigerweise Stifte, welche in einem der beiden Körper befestigt sind und sich in Bohrungen des anderen Körpers erstrecken. Auch bei den Geradführungsmitteln gibt es eine gewisse Verkrustungsgefahr, sie ist jedoch geringer als im Bereich der Spindel, weil die Stifte im Verlauf der Dehnung der Dehnschraube aus den Bohrungen, in welchen sie geführt sind, herausgleiten, aber nicht hineinfahren müssen; nur über der Federweg fahren die Stifte auch wieder in die Bohrungen zurück. Trotzdem kann es vorteilhaft sein, auch dort Dichtringe vorzusehen, welche die Stifte umgeben und ein Eindringen von zunächst flüssigen Speiseresten in die Bohrungen des einen Körpers zu verhindern.

Ein Ausführungsbeispiel der Erfindung ist in den beigefügten Zeichnungen dargestellt.
Figur 1 zeigt einen Längsschnitt durch eine Dehnschraube,
Figur 2 zeigt eine Stirnansicht der Dehnschraube, und
Figur 3 zeigt ein typisches Zug-Dehnungs-Diagramm für einen pseudoelastischen Draht.

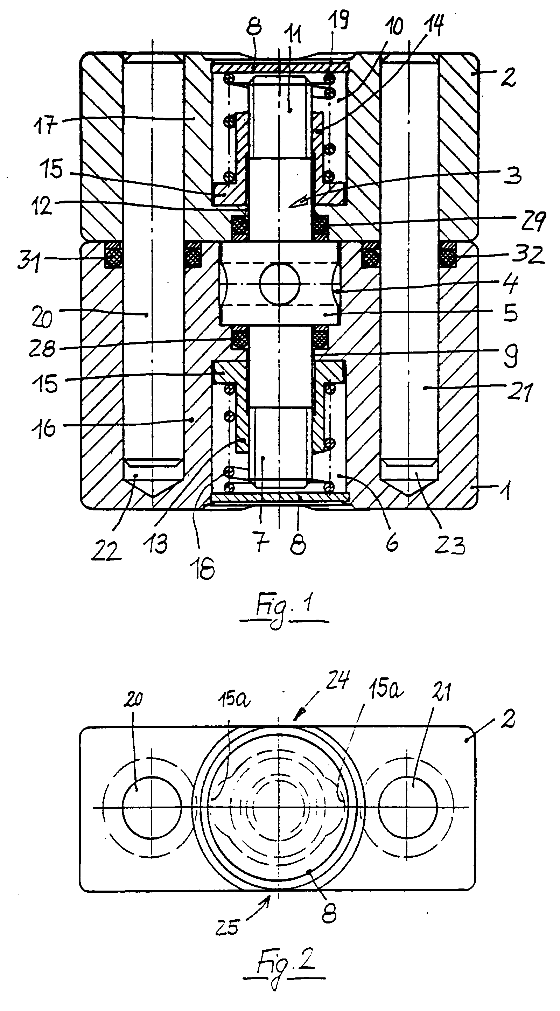

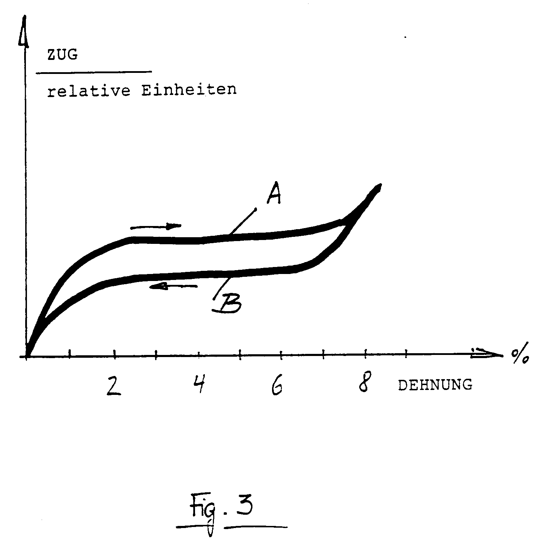

Die in den Figuren 1 und 2 dargestellte Dehnschraube hat zwei in ihrem gegenseitigen Abstand veränderbare, ungefähr quaderförmige Körper 1 und 2, welche durch eine Spindel 3 verstellt werden können. Zu diesem Zweck hat der größere Körper 1 eine erste Ausnehmung 4 zur Aufnahme eines Betätigungsteils 5 der Spindel und eine zweite Ausnehmung 6 zur Aufnahme eines ersten Gewindeabschnitts 7 der Spindel. Die erste Ausnehmung 4 befindet sich auf der dem zweiten Körper 2 zugewandten Seite und ist nach dort hin offen. Die zweite Ausnehmung 6 befindet sich auf der gegenüberliegenden Seite des Körpers 1 und ist durch einen Deckel 8 verschlossen. Die beiden Ausnehmungen 4 und 6 sind durch eine zylindrische Bohrung 9 verbunden, durch welche das eine Gewindeteil 7 der Spindel hindurchgeführt ist.

Der andere Körper 2 hat auf seiner dem ersten Körper 1 abgewandten Seite eine der Ausnehmung 6 gleiche Ausnehmung 10 zur Aufnahme eines zweiten Gewindeteils 11 der Spindel. Die Ausnehmung 10 ist ebenfalls durch einen Deckel 8 verschlossen; auf der ihm gegenüberliegenden Seite hat der Körper 2 eine zylindrische Bohrung 12, durch welche das Gewindeteil 11 in die Ausnehmung 10 hineingeführt ist. In den Ausnehmungen 6 und 10 steckt auf den Gewindeteilen 7 und 11 jeweils eine Gewindehülse 13 bzw. 14, welche einen Bund 15 mit diagonalen Fortsätzen 15a hat, welche in entsprechende, längsverlaufende Führungsnuten in der die Ausnehmung 6 bzw. 10 begrenzenden Wand 16 bzw. 17 eingreifen und ein Verdrehen der Gewindehülsen 13 und 14 verhindern. Zwischen dem Bund 15 und dem Deckel 8 ist jeweils eine pseudoelastische Wendelfeder 18 bzw. 19 eingespannt.

Als Geradführungsmittel sind zwei Führungsstifte 20 und 21 vorgesehen, welche mit ihrem einen Ende in Bohrungen des Körpers 2 eingepreßt sind und sich im übrigen in Bohrungen 22 und 23 des Körpers 1 erstrecken und darin verschieblich sind.

Die Dehnschraube wird verstellt, indem man mit einem Stift von der offenen Oberseite 24 oder von der offenen Unterseite 25 her in eines der Löcher des Betätigungsteils eingreift und dieses verdreht. Dadurch werden die Gewindehülsen 13 und 14 voneinander weg verschoben und spannen dadurch die Wendeffedern 18 und 19, welche ihrerseits mit der ihnen zur Verfügung stehenden Federkraft die Körper 1 und 2 voneinander weg bewegen. O-Ringe 28 bis 32 verhindern das Eindringen von Speiseresten in die Bohrungen 22 und 23 sowie in die Ausnehmungen 6 und 10.

Figur 3 zeigt ein typisches Zug-Dehnungs-Diagramm für einen pseudoelastischen Nickel-Titan-Draht. Wird ein solcher Draht durch Zug gedehnt, so benötigt man zunächst eine mäßig steil ansteigende Zugkraft, um den Draht fortschreitend zu dehnen. Ab einer Dehnung von ungefähr 2% wächst die für eine fortschreitende Dehnung erforderliche Zugkraft nur noch sehr geringfügig an, bis sie bei etwa 8 % Dehnung wieder stärker zu steigen beginnt (oberer Zweig A der Kurve.) Entlastet man danach den Draht, so bildet sich die Dehnung längs des unteren Zweiges B der Kurve zuzrück. Die Erscheinung zeigt eine Hysterese. Der flach verlaufende Teil der Kennlinie, im dargestellten Beispiel zwischen 2% und 8%, das sog. Martensit-Plateau, wird für Zwecke der Erfindung ausgenützt. Der für eine Zahnkorrektur weniger wirksame Anstiegsbereich der Kurve zwischen 0 und etwa 2% Dehnung kann für die Zwekke der Zahnkorrektur dadurch ausgeschaltet werden, daß man die Federn 18 und 19 mit einer entsprechenden Vorspannung in die Ausnehmungen 6 und 10 einbaut und die Ausnehmungen 6 und 10 danach verschließt, z.B. durch Umbördeln oder Verschweißen der Deckel 8.

## Patentansprüche

1. Dehnschraube zum Korrigieren von Fehlstellungen von Zähnen, mit zwei Körpern (1, 2), deren gegenseitiger Abstand mittels einer Spindel (3) veränderbar ist, die einen Betätigungsteil (5) und davon ausgehend einen oder zwei Gewindeteile (7,11) hat, wobei das Betätigungsteil (5) drehbar in dem einen Körper (1) und ein Gewindeteil (11) in dem anderen Körper (2) drehbar gelagert ist, mit Geradführungsmitteln (22,23), welche mit beiden Körpern (1,2) in Eingriff stehen und sie unter Vermeidung einer Relativdrehung beim Verändern ihres Abstands gerade führen, und mit einer Gewindehülse (13,14) auf jedem der Gewindeteile (7,11) der Spindel (3), wobei die Gewindehülse (13,14) in einer Ausnehmung (6,10) des jeweiligen Körpers (1,2) gegen Drehungen gesichert längs der Spindel (3) geführt ist und ihre Verschiebebewegung den Körpern (1,2) über eine die Dehnkraft bestimmende Feder (18,19) mitteilt,
**dadurch gekennzeichnet,** daß die Feder (18,19) aus einer Formgedächtnislegierung besteht, die unter den im Mund vorherrschenden Temperaturen pseudoelastisch ist.

2. Dehnschraube nach Anspruch 1, **dadurch gekennzeichnet,** daß die Feder (18,19) aus einer Legierung auf der Basis von Nickel und Titan besteht, in welcher Nickel und Titan in ungefähr gleichen Atomprozenten enthalten sind.

3. Dehnschraube nach einem der vorstehenden Ansprüche, **dadurch gekennzeichnet,** daß die Feder (18,19) eine Druckfeder ist.

4. Dehnschraube nach einem der vorstehenden Ansprüche, dadurch gekennzeichnet, daß die Spindel (3) zwei Gewindeteile (7,11) mit entgegengesetztem Windungssinn hat.

5. Dehnschraube nach Anspruch 3, **dadurch gekennzeichnet,** daß die Feder (18,19) zwischen einem an der Gewindehülse (13,14) vorgesehenen Widerlager (15) und einem die Ausnehmung (6,10) im Körper (1,2) an dessen äußeren Ende abschließenden Deckel (8) eingespannt ist.

6. Dehnschraube nach einem der vorstehenden Ansprüche, **dadurch gekennzeichnet,** daß die Gewindeteile (7,11) der Spindel (3) von einer Dichtung (28,29) umgeben sind, welche den vom Betätigungsteil (5) in die jeweilige Ausnehmung (6,10) des Körpers (1,2) führenden Zugang (9,12) abdichten.

7. Dehnschraube nach einem der vorstehenden Ansprüche, **dadurch gekennzeichnet,** daß die Geradührungsmittel (20,21) Stifte sind, welche in einem der Körper (2) befestigt sind und sich in Bohrungen (22,23) des anderen Körpers (1) erstrecken, welche durch Dichtringe (31,32) abgedichtet sind, welche die Stifte (20,21) umgeben.

## Claims

1. Jackscrew for use in correcting misalignments of teeth having two bodies (1, 2) whose spacing one relative to the other can be varied by means of a spindle (3), which latter comprises an actuating member (5) and, projecting therefrom, one or two threaded portions (7, 11), the actuating member (5) being rotatably seated in the one body (1) and the threaded portion (11) being rotatably seated in the other body (2), there being provided linear guide means (22, 23) that are in engagement with both bodies (1, 2) for guiding them linearly as their spacing changes, without permitting any relative rotation, and having a threaded sleeve (13, 14) provided on each of the threaded portions (7, 11) of the spindle (3), the threaded sleeve (13, 14) being guided, but secured against rotation, in a recess (6, 10) in the respective body (1, 2) for longitudinal movement along the spindle (3), and transmitting its relative motion to the bodies (1, 2) via a spring (18, 19) that determines the extension force. **characterised in that** the spring (18, 19) is made from a form-memory alloy that is pseudoelastic at the temperatures prevailing in the mouth.

2. Jackscrew according to Claim 1, **characterised in that** the spring (18, 19) consists of an alloy based on nickel and titanium, in which nickel and titanium are contained in approximately equal atomic percentages.

3. Jackscrew according to any of the preceding claims, **characterised in that** the spring (18, 19) is a compression spring.

4. Jackscrew according to any of the preceding claims, **characterised in that** the spindle (3) comprises two threaded portions (7, 11) with their threads wound in opposite directions.

5. Jackscrew according to Claim 3, **characterised in that** the spring (18, 19) is tensioned between a support (15) provided on the threaded sleeve (13, 14) and a cover (8) that closes the recess (6, 10) in the body (1, 2) at its outer end.

6. Jackscrew according to any of the preceding claims, **characterised in that** the threaded portions (7, 11) of the spindle (3) are enclosed by a seal (28, 29), that seal the access (9, 12) leading from the actuating member (5) to the respective recess (6, 10) of the body (1, 2).

7. Jackscrew according to any of the preceding claims, **characterised in that** the linear guide means (20, 21) are pins that are fixed in one of the bodies (2) and extend into bores (22, 23) of the other body (1), that are sealed off by sealing rings (31, 32) surrounding the pins (20, 21).

## Revendications

1. Vis élastique pour corriger des dents mal positionnées, comprenant: deux corps (1, 2) dont l'écartement réciproque peut être modifié au moyen d'une broche (3) qui possède une partie de commande (5) et une ou deux parties filetées (7, 11) s'étendant à partir de la première citée, la partie de commande (5) étant montée en rotation dans le premier corps (1) et une partie filetée (11) étant montée en rotation dans l'autre corps (2); des moyens de guidage rectiligne (22, 23) qui viennent s'engrener avec les deux corps (1, 2) et qui guident ces derniers en ligne droite en évitant une rotation relative lors de la modification de leur écartement; ainsi qu'un manchon taraudé (13, 14) sur chaque partie filetée (7, 11) de la broche (3), le manchon taraudé (13, 14) étant guidé dans un évidement (6, 10) pratiqué dans le corps respectif (1, 2), en antirotation, de manière fiable le long de la broche (3) et conférant son mouvement de déplacement aux corps (1, 2) via un ressort (18, 19) déterminant la force élastique, caractérisée en ce que le ressort (18, 19) est constitué d'un alliage conservant la mémoire de la forme, qui présente une pseudo-élasticité sous l'influence des températures régnant dans la bouche.

2. Vis élastique selon la revendication 1, caracterisée en ce que le ressort (18, 19) est constitué d'un alliage à base de nickel et de titane, le nickel et le titane étant présents en des teneurs en atomes % approximativement égales.

3. Vis élastique selon l'une quelconque des revendications précédentes, caractérisée en ce que le ressort (18, 19) est un ressort de pression.

4. Vis élastique selon l'une quelconque des revendications précédentes, caractérisée en ce que la broche (3) possède deux parties filetées (7, 11) dont les sens d'enroulement sont opposés.

5. Vis élastique selon la revendication 3, caractérisée en ce que le ressort (18, 19) est enserré entre une butée (15) prévue sur le manchon taraudé (13, 14) et un couvercle (8) obturant l'évidement (6, 10) pratiqué dans le corps (1, 2) à son extrémité externe.

6. Vis élastique selon l'une quelconque des revendications précédentes, caractérisée en ce que les parties filetées (7, 11) de la broche (3) sont entourées d'un joint d'étanchéité (28, 29) qui obture le passage (9, 12) s'étendant entre la partie de commande (5) et l'évidement respectif (6, 10) pratiqué dans le corps (1, 2).

7. Vis élastique selon l'une quelconque des revendications précédentes, caractérisée en ce que les moyens de guidage rectiligne (20, 21) sont des goujons qui sont fixés dans le premier corps (2) et qui s'étendent dans des alésages (22, 23) pratiqués dans l'autre corps (1), et obturés par des anneaux d'étanchéité (31, 32) qui entourent les goujons (20, 21).
